# EUROPEAN PATENT SPECIFICATION

(11) **EP 4 283 072 B1**
(45) Date of publication and mention of the grant of the patent: **30.10.2024**
(21) Application number: 22206235.8
(22) Date of filing: 08.11.2022
(51) Int. Cl.: E04G 23/02, E04H 9/02

(54) **CAULKING MONITORING RESTORING APPARATUS AND CAULKING RESTORING METHOD**
VORRICHTUNG ZUR WIEDERHERSTELLUNG EINER ABDICHTUNGSÜBERWACHUNG UND VERFAHREN ZUR WIEDERHERSTELLUNG EINER ABDICHTUNG
APPAREIL DE RESTAURATION DE SURVEILLANCE DE CALFEUTRAGE ET PROCÉDÉ DE RESTAURATION DE CALFEUTRAGE

(30) Priority: 24.05.2022 CN 202210567067
(43) Date of publication of application: 29.11.2023
(73) Proprietor: China Three Gorges Co., Ltd., Wuhan Hubei 430010 (CN)
(72) Inventor: GAO, Chao, Wuhan, 430010 (CN); WANG, Zhiwei, Wuhan, 430010 (CN); LI, Yuxin, Wuhan, 430010 (CN); YU, Jie, Wuhan, 430010 (CN); YU, Qi, Wuhan, 430010 (CN)
(74) Representative: Barker Brettell LLP

(56) References cited:
- CN-A- 114 086 794
- US-A1- 2017 350 152

## Description

### TECHNICAL FIELD

The present invention relates to the field of construction reinforcement technologies, and specifically to a caulking monitoring restoring apparatus and a caulking restoring method.

### BACKGROUND

Structural gaps are common in industrial and civil construction in civil engineering. There are generally two types of gaps: cracks such as structural cracks, brittle fracture cracks, and settlement cracks caused by stress overload structural damage; and construction gaps, that is, gaps specially pre-designed for construction requirements, for example, seismic joints and temperature expansion joints in modem structures and gaps reserved for easy installation between mortise and tenon nodes in conventional wood construction. Although some gaps are essential for construction, the presence of gaps poses potential safety risks to the structural safety, especially potential safety risks under the effect of earthquakes. For example, for beam-column nodes, when there are gaps in the nodes, the stiffness and bearing capacity of the nodes are significantly reduced.

Disclosed in an existing technology (see CN 114 086 794 B) is a longitudinal caulking and monitoring restoring apparatus, including: a first panel, provided with a plurality of guide holders; a second panel, arranged opposite to the first panel; a stranded wire, wound on the guide holders, where a first end of the stranded wire is connected to a stranded wire end holder, the stranded wire end holder is fixedly connected to the second panel, a second end of the stranded wire extends into the space between the second panel and the first panel and is connected to a fastening apparatus, and the fastening apparatus is capable of tightening and releasing the stranded wire; four groups of elastic assemblies, arranged between the first panel and the second panel and being respectively close to corners of the second panel, where a first end of the elastic assembly is fixedly connected to the first panel, and a second end of the elastic assembly is fixedly connected to the second panel; and two groups of air columns, where a connecting line of one group of air columns intersects a connecting line of the other group of air columns to form a cross, each group of air columns includes two air columns, the first panel is provided with one air channel corresponding to each air column and an air slot in communication with a first end of the air channel, the air column is an elastic hollow column with an opening at a first end and a closed second end, the first panel is provided with a first limit groove around the air slot, the first end of the air column is inserted in the first limit groove, the opening is opposite to the air slot, the second end of the air column abuts against the second panel, a second end of the air channel is provided with an air nozzle, and the air nozzle is connected to an air pressure gauge.

The foregoing existing technology can implement caulking and have the functions of gap deformation monitoring and seismic gap restoration. However, the foregoing existing technology ignores the problem that two sidewalls of a gap are not absolutely flat and is not applicable to caulking when sidewalls of a gap are not flat, resulting in a narrow application range.

### SUMMARY

Therefore, a technical problem to be resolved by the present invention is to overcome the disadvantage that the longitudinal caulking and monitoring restoring apparatus in the existing technology is not applicable to caulking when sidewalls of a gap are not flat, and provide a caulking monitoring restoring apparatus and a caulking restoring method that can adapt to caulking when sidewalls of a gap are not flat.

To resolve the foregoing technical problem, the present invention provides a caulking monitoring restoring apparatus, including: a cushioning assembly, including two rows and two columns of air posts, where a restoring air hole is provided in a sidewall of each air post, the restoring air hole is connected to a restoring air pipe, and a restoring air nozzle is arranged at an end portion of the restoring air pipe; two side plate assemblies, being respectively a first side plate assembly and a second side plate assembly, respectively connected to two sides of the cushioning assembly, where each of the first side plate assembly and the second side plate assembly includes a porous plate, an oil distribution structure, and jack posts, a plurality of rows and a plurality of columns of jack post holes are provided in a side of the porous plate away from the cushioning assembly, a plurality of oil distribution channel holes are provided in the porous plate, each oil distribution channel hole is in communication with one row of jack post holes, the oil distribution structure includes oil distribution channels having a one-to-one correspondence with the plurality of oil distribution channel holes and an oil inlet cavity in communication with first ends of the plurality of oil distribution channels, the oil inlet cavity is connected to an oil inlet nozzle, oil outlet holes having a one-to-one correspondence with jack post holes in a corresponding row are provided in each oil distribution channel, each oil distribution channel is movably arranged in a corresponding oil distribution channel hole and has a first position that allows communication between each oil outlet hole and a corresponding jack post hole and a second position that allows each oil outlet hole to be blocked by a hole wall of the oil distribution channel hole, a plurality of rows and a plurality of columns of jack posts are arranged and have a one-to-one correspondence with the plurality of rows and the plurality of columns of jack post holes, and the jack posts are movably arranged in the jack post holes; and a monitoring assembly, including: a first monitoring ruler, fixedly arranged at a bottom end of the porous plate in the first side plate assembly, and extending toward the porous plate in the second side plate assembly; a first extension pointer, including a first extension pointer fixed end and a first extension pointer indication end, where the first extension pointer fixed end is fixedly arranged at a bottom end of the porous plate in the second side plate assembly and on a side of the porous plate away from the first monitoring ruler, and the first extension pointer indication end extends onto the first monitoring ruler; a first pointer, including a first pointer fixed end and a first pointer indication end, where the first pointer fixed end is fixedly arranged at the bottom end of the porous plate in the second side plate assembly and on a side of the porous plate close to the first monitoring ruler, and the first pointer indication end extends onto the first monitoring ruler; a second monitoring ruler, fixedly arranged at a top end of the porous plate in the second side plate assembly, and extending toward the porous plate in the first side plate assembly, where the second monitoring ruler and the first monitoring ruler are located on the same side of the first side plate assembly and the second side plate assembly; a second extension pointer, including a second extension pointer fixed end and a second extension pointer indication end, where the second extension pointer fixed end is fixedly arranged at a top end of the porous plate in the first side plate assembly and on a side of the porous plate away from the second monitoring ruler, and the second extension pointer indication end extends onto the second monitoring ruler; and a second pointer, including a second pointer fixed end and a second pointer indication end, where the second pointer fixed end is fixedly arranged at the top end of the porous plate in the first side plate assembly and on a side of the porous plate close to the second monitoring ruler, and the second pointer indication end extends onto the second monitoring ruler.

Optionally, the first monitoring ruler includes:
a first monitoring ruler end base, fixedly arranged at the bottom end of the porous plate in the first side plate assembly;
a first far-end dial, perpendicularly connected to the first monitoring ruler end base, and extending toward the porous plate in the second side plate assembly, where the first extension pointer indication end extends onto the first far-end dial;
a first near-end dial, perpendicularly connected to an end portion of the first monitoring ruler end base to form an L shape, and extending toward the porous plate in the second side plate assembly, where the first pointer indication end extends onto the first near-end dial, and marks on the first near-end dial are denser than those on the first far-end dial; and/or
the second monitoring ruler includes:
   a second monitoring ruler end base, fixedly arranged at the top end of the porous plate in the second side plate assembly;
   a second far-end dial, perpendicularly connected to the second monitoring ruler end base, and extending toward the porous plate in the first side plate assembly, where the second extension pointer indication end extends onto the second far-end dial; and
   a second near-end dial, perpendicularly connected to an end portion of the second monitoring ruler end base to form an L shape, and extending toward the porous plate in the first side plate assembly, where the second pointer indication end extends onto the second near-end dial, and marks on the second near-end dial are denser than those on the second far-end dial.

Optionally, the first extension pointer fixed end and the first extension pointer indication end are interconnected by a first lever arm, and a cross-sectional area of the first extension pointer indication end is less than a cross-sectional area of the first lever arm; and/or
the second extension pointer fixed end and the second extension pointer indication end are interconnected by a second lever arm, and a cross-sectional area of the second extension pointer indication end is less than a cross-sectional area of the second lever arm.

Optionally, a cross-sectional area of the first pointer indication end is less than a cross-sectional area of the first pointer fixed end; and/or
a cross-sectional area of the second pointer indication end is less than a cross-sectional area of the second pointer fixed end.

Optionally, the oil distribution channel hole penetrates the porous plate, a length of the oil distribution channel is greater than a length of the oil distribution channel hole, and the oil distribution structure further includes a sealing plate configured to seal second ends of the plurality of oil distribution channels.

Optionally, the porous plate is further provided with:
oil return branch passages, arranged between any two adjacent rows of jack post holes, where the jack post holes are in communication with the oil return branch passage through oil discharge ports; and
an oil return main passage, arranged on the same side of a plurality of oil return branch passages, and being in communication with the oil return branch passages, where an end of the oil return main passage is connected to an oil return nozzle, and the oil return nozzle protrudes from the porous plate.

Optionally, each jack post includes a solid post body and a solid post cap, a diameter of the post body is equal to a diameter of the oil outlet hole, and the post cap has a hemispherical shape.

Optionally, a plurality of limit grooves are provided in the porous plate, and the air posts are arranged in the limit grooves.

Optionally, a sidewall of each air post has a corrugated shape.

The present invention further provides a caulking restoring method, applied to the caulking monitoring restoring apparatus, where the caulking restoring method includes:
S 1. compressing the air posts to make a total thickness of the caulking monitoring restoring apparatus less than a width of a gap to be caulked;
S2. releasing the compression of the air posts after the caulking monitoring restoring apparatus is inserted into the gap, where an elastic force of the air posts makes the jack posts abut against a sidewall of the gap;
S3. adjusting positions of the oil distribution channels in the oil distribution channel holes to the first position;
S4. externally connecting the oil inlet nozzle to an oil pump, feeding hydraulic oil into the oil inlet cavity, where the hydraulic oil enters the jack post holes through the oil outlet holes, and the jack posts are pushed by the hydraulic oil to move outward, and when any one of a reading indicated by the first extension pointer on the first monitoring ruler, a reading indicated by the first pointer on the first monitoring ruler, a reading indicated by the second extension pointer on the second monitoring ruler, and a reading indicated by the second pointer on the second monitoring ruler starts to change, adjusting the positions of the oil distribution channels in the oil distribution channel holes to the second position, removing the oil pump, and sealing the oil inlet nozzle; and
S5. recording the reading indicated by the first extension pointer on the first monitoring ruler, the reading indicated by the first pointer on the first monitoring ruler, the reading indicated by the second extension pointer on the second monitoring ruler, and the reading indicated by the second pointer on the second monitoring ruler, and using the readings as monitoring initial values of an inflation process of the air posts; and
When the gap has undergone changes in position and shape, the caulking restoring method further includes:
   S6. sequentially externally connecting an air pump to the restoring air nozzle to feed air into the air post for each air post subject to compression, and adjusting a spacing between the first side plate assembly and the second side plate assembly under the support of the air posts, until the reading indicated by the first extension pointer on the first monitoring ruler, the reading indicated by the first pointer on the first monitoring ruler, the reading indicated by the second extension pointer on the second monitoring ruler, and the reading indicated by the second pointer on the second monitoring ruler all reach the monitoring initial values.

The technical solution in the present invention has the following advantages:
In the caulking monitoring restoring apparatus provided in the present invention, a cushioning assembly is arranged between a first side plate assembly and a second side plate assembly, so that pressure may be respectively applied to the first side plate assembly and the second side plate assembly on left and right sides of the entire caulking monitoring restoring apparatus, to compress air posts forming the cushioning assembly. When a total thickness of the entire caulking monitoring restoring apparatus is less than the width of a gap to be caulked, the caulking monitoring restoring apparatus may be readily caulked in the gap. After the caulking monitoring restoring apparatus is inserted into the gap, the pressure on the first side plate assembly and the second side plate assembly is released, that is, the compression of the air posts is released, and the elastic force of the air posts makes jack posts abut against sidewalls of the gap. Next, the positions of the oil distribution channels in the oil distribution channel holes are adjusted to a first position. In this case, oil outlet holes in the oil distribution channels are in communication with jack post holes. Next, an oil inlet nozzle is externally connected to an oil pump, and hydraulic oil is fed into the oil inlet cavity. The hydraulic oil enters the jack post holes through the oil outlet holes, and the jack posts are pushed by the hydraulic oil to move outward, to enable the jack posts to tightly abut against two sidewalls of the gap. When the sidewalls of the gap are not flat, the jack posts at different positions move outward by different distances, to achieve applicability to caulking when the sidewalls of the gap are not flat. When one of a reading indicated by a first extension pointer on a first monitoring ruler, a reading indicated by a first pointer on the first monitoring ruler, a reading indicated by a second extension pointer on a second monitoring ruler, and a reading indicated by a second pointer on the second monitoring ruler starts to change, it indicates that at this time the positions of the jack posts are limited by the sidewalls of the gap and as a result the jack posts are kept from moving. The force of the hydraulic oil makes the air posts compress, and a spacing between the first side plate assembly and the second side plate assembly changes. In this case, it indicates that the positions of the jack posts are adjusted in place. Therefore, the positions of the oil distribution channels in the oil distribution channel holes are adjusted to a second position. The oil pump is removed, and the oil inlet nozzle is sealed, to prevent the air posts from being further compressed. In addition, the jack posts are locked after adaptive adjustment, to keep the jack posts from excessively jacking the sidewalls of the gap. The reading indicated by the first extension pointer on the first monitoring ruler, the reading indicated by the first pointer on the first monitoring ruler, the reading indicated by the second extension pointer on the second monitoring ruler, and the reading indicated by the second pointer on the second monitoring ruler are recorded, and the readings are used as monitoring initial values of an inflation process of the air posts. When the gap has undergone changes in position and shape, an air pump is sequentially externally connected to a restoring air nozzle to feed air into the air post for each air post subject to compression, and the spacing between the first side plate assembly and the second side plate assembly is adjusted under the support of the air posts, until the reading indicated by the first extension pointer on the first monitoring ruler, the reading indicated by the first pointer on the first monitoring ruler, the reading indicated by the second extension pointer on the second monitoring ruler, and the reading indicated by the second pointer on the second monitoring ruler all reach the monitoring initial values. When the readings reach the monitoring initial values, it indicates that the spacing of the gap returns to the state before deformation, and the member is restored. Therefore, the caulking monitoring restoring apparatus has functions such as caulking, monitoring, and restoring and has high adaptability to nonplanar complex gap sidewalls such as rough and uneven surfaces and voids and pits.

### BRIEF DESCRIPTION OF THE DRAWINGS

To describe the technical solutions in specific embodiments of the present invention or the prior art more clearly, the following briefly introduces the accompanying drawings required for describing the specific embodiments or the prior art. Apparently, the accompanying drawings in the following description show some embodiments of the present invention, and a person of ordinary skill in the art may still derive other drawings from these accompanying drawings without creative efforts.
FIG. 1 is a schematic structural diagram of a caulking monitoring restoring apparatus according to Embodiment 1 of the present invention;
FIG. 2 is an enlarged view of A in FIG. 1;
FIG. 3 is an enlarged view of B in FIG. 1;
FIG. 4 is an exploded view of the caulking monitoring restoring apparatus shown in FIG. 1;
FIG. 5 is a top view of a porous plate in FIG. 4;
FIG. 6 is a cross-sectional view along A-A in FIG. 5;
FIG. 7 is a cross-sectional view along B-B in FIG. 5;
FIG. 8 is a cross-sectional view along C-C in FIG. 5;
FIG. 9 is a cross-sectional view along D-D in FIG. 5; and
FIG. 10 is a side view of a porous plate in FIG. 4;
FIG. 11 is a cross-sectional view along E-E in FIG. 10;
FIG. 12 is a schematic structural diagram of a first monitoring ruler in FIG. 2;
FIG. 13 is a schematic structural diagram of an air post close to an inner end;
FIG. 14 is a schematic structural diagram of an air post close to an outer end;
FIG. 15 is a top view of the air post in FIG. 14; and
FIG. 16 is a cross-sectional view of the air post in FIG. 14.

### Reference numerals:

1. air post; 101. restoring air hole; 2. restoring air pipe; 3. restoring air nozzle; 4. first side plate assembly; 401. porous plate; 4011. jack post hole; 4012. oil distribution channel hole; 4013. oil return branch passage; 4014. oil discharge port; 4015. oil return main passage; 4016. oil return nozzle; 4017. limit groove; 402. oil distribution structure; 4021. oil distribution channel; 40211. oil outlet hole; 4022. oil inlet cavity; 4023. oil inlet nozzle; 4024. sealing plate; 403. jack post; 4031. post body; 4032. post cap; 5. second side plate assembly; 6. first monitoring ruler; 601. first monitoring ruler end base; 602. first far-end dial; 603. first near-end dial; 7. first extension pointer; 701. first extension pointer fixed end; 702. first extension pointer indication end; 703. first lever arm; 8. first pointer; 801. first pointer fixed end; 802. first pointer indication end; 9. second monitoring ruler; 901. second monitoring ruler end base; 902. second far-end dial; 903. second near-end dial; 10. second extension pointer; 1001. second extension pointer fixed end; 1002. second extension pointer indication end; 1003. second lever arm; 11. second pointer; 1101. second pointer fixed end; and 1102. second pointer indication end.

### DETAILED DESCRIPTION

The following clearly and completely describes the technical solutions of the present invention with reference to the accompanying drawings. Apparently, the described embodiments are merely some rather than all of the embodiments of the present invention.

In the description of the present invention, it needs to be understood that orientation or location relationships indicated by terms "center", "up", "down", "left", "right", "vertical", "horizontal", "inside", and "outside" are based on orientation or location relationships shown in the accompanying drawings, and are only used to facilitate description of the present invention and simplify description, but are not used to indicate or imply that the apparatuses or elements must have specific orientations or are constructed and operated by using specific orientations, and therefore, cannot be understood as a limit to the present invention. In addition, the terms "first", "second", and "third" are used only for description, but are not intended to indicate or imply relative importance.

In the description of the present invention, it needs to be noted that unless otherwise expressly specified and defined, "mounted", "connected", and "connection", should be understood in a broad sense, for example, fixedly connected, detachably connected or integrally connected; or mechanically connected or electrically connected; or connected directly or indirectly through an intermediate, or two elements communicated internally. For a person of ordinary skill in the art, specific meanings of the terms in the present invention should be understood according to specific cases.

### Embodiment 1

Structural gaps are common in industrial and civil construction in civil engineering. There are generally two types of gaps: cracks such as structural cracks, brittle fracture cracks, and settlement cracks caused by stress overload structural damage; and construction gaps, that is, gaps specially pre-designed for construction requirements, for example, seismic joints and temperature expansion joints in modem structures and gaps reserved for easy installation between mortise and tenon nodes in conventional wood construction. Although some gaps are essential for construction, the presence of gaps poses potential safety risks to the structural safety, especially potential safety risks under the effect of earthquakes. For example, for beam-column nodes, when there are gaps in the nodes, the stiffness and bearing capacity of the nodes are significantly reduced.

A longitudinal caulking and monitoring restoring apparatus disclosed in an existing technology ignores the problem that two sidewalls of a gap are not absolutely flat and is not applicable to caulking when sidewalls of a gap are not flat, resulting in a narrow application range.

For this, this embodiment provides a caulking monitoring restoring apparatus. The caulking monitoring restoring apparatus can adapt to caulking when sidewalls of a gap are not flat.

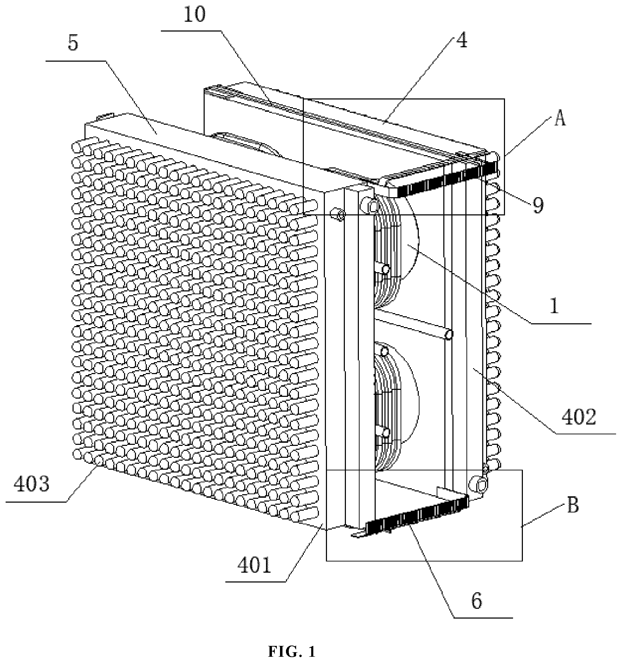

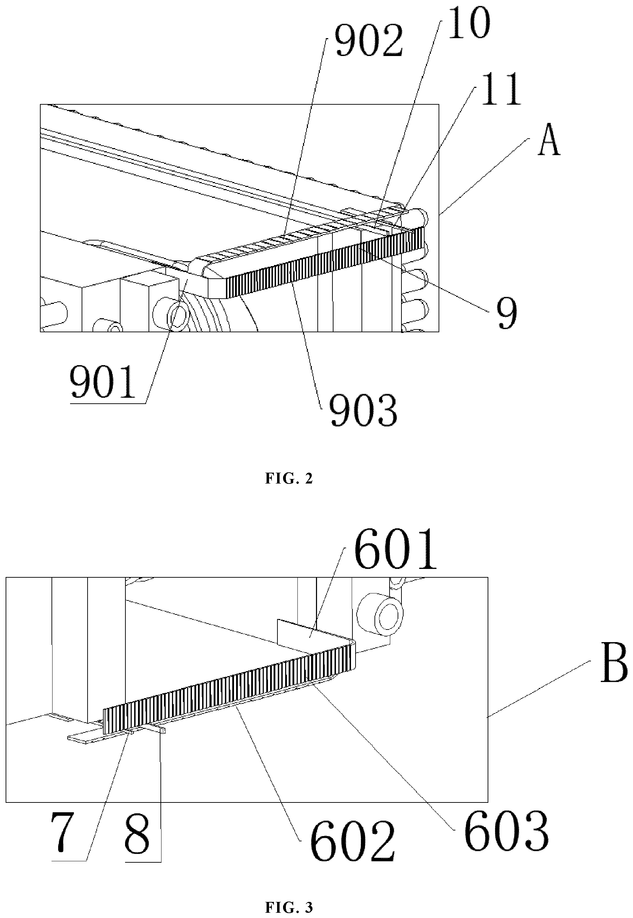

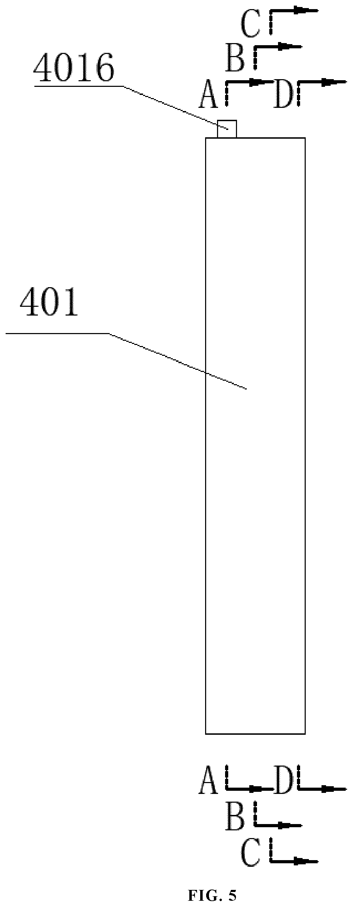

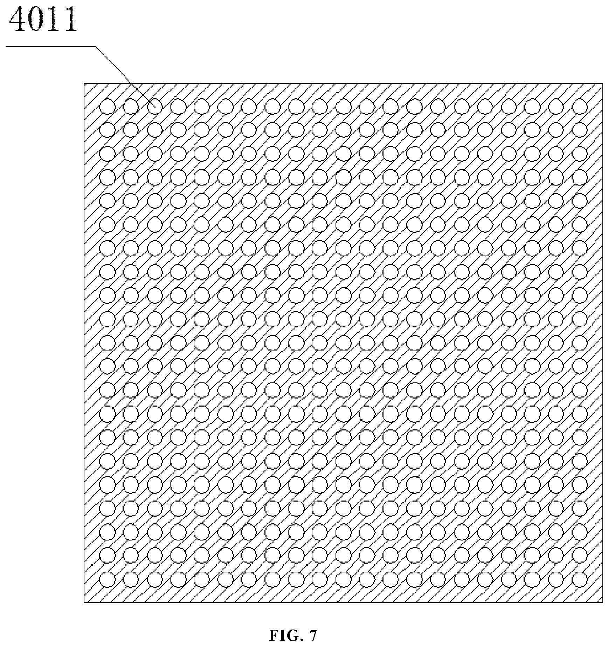

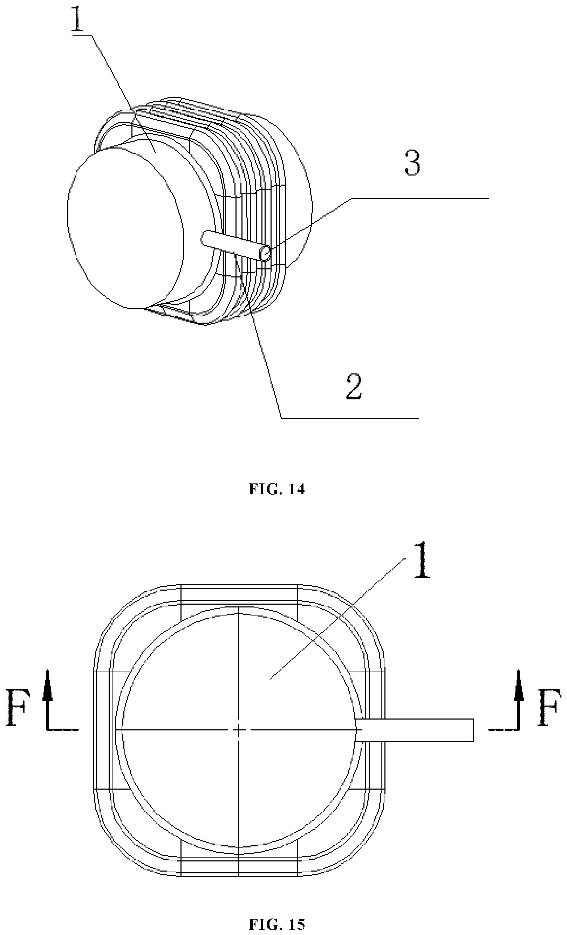

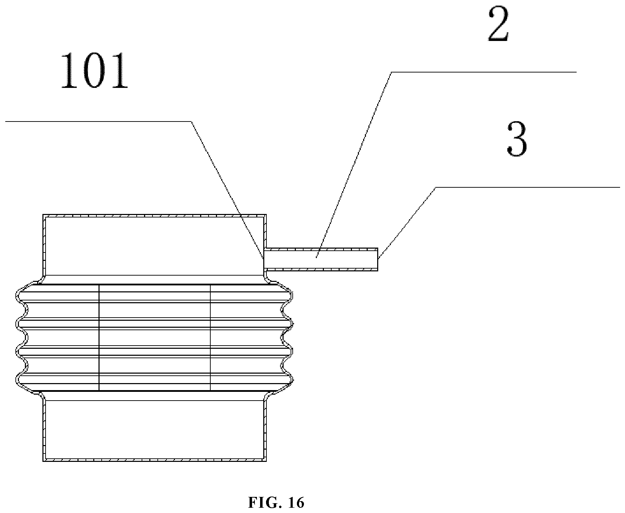

In an embodiment, as shown in FIG. 1 to FIG. 16, the caulking monitoring restoring apparatus includes a cushioning assembly, side plate assemblies, and a monitoring assembly. The cushioning assembly includes two rows and two columns of air posts 1. A restoring air hole 101 is provided in a sidewall of each air post 1. The restoring air hole 101 is connected to a restoring air pipe 2. A restoring air nozzle 3 is arranged at an end portion of the restoring air pipe 2. Two side plate assemblies are respectively a first side plate assembly 4 and a second side plate assembly 5, and are respectively connected to two sides of the cushioning assembly. Each of the first side plate assembly 4 and the second side plate assembly 5 has the same structure and includes a porous plate 401, an oil distribution structure 402, and jack posts 403. A plurality of rows and a plurality of columns of jack post holes 4011 are provided in a side of the porous plate 401 away from the cushioning assembly. A plurality of oil distribution channel holes 4012 are provided in the porous plate 401. Each oil distribution channel hole 4012 is in communication with one row of jack post holes 4011. The oil distribution structure 402 includes oil distribution channels 4021 having a one-to-one correspondence with the plurality of oil distribution channel holes 4012 and an oil inlet cavity 4022 in communication with first ends of the plurality of oil distribution channels 4021. The oil inlet cavity 4022 is connected to an oil inlet nozzle 4023. Oil outlet holes 40211 having a one-to-one correspondence with jack post holes 4011 in a corresponding row are provided in each oil distribution channel 4021. Each oil distribution channel 4021 is movably arranged in a corresponding oil distribution channel hole 4012 and has a first position that allows communication between each oil outlet hole 40211 and a corresponding jack post hole 4011 and a second position that allows each oil outlet hole 40211 to be blocked by a hole wall of the oil distribution channel hole 4012. A plurality of rows and a plurality of columns of jack posts 403 are arranged and have a one-to-one correspondence with the plurality of rows and the plurality of columns of jack post holes 4011. The jack posts 403 are movably arranged in the jack post holes 4011. The monitoring assembly includes a first monitoring ruler 6, a first extension pointer 7, a first pointer 8, a second monitoring ruler 9, a second extension pointer 10, and a second pointer 11. As shown in FIG. 3, the first monitoring ruler 6 is fixedly arranged at a bottom end of the porous plate 401 in the first side plate assembly 4, and extends toward the porous plate 401 in the second side plate assembly 5. The first extension pointer 7 includes a first extension pointer fixed end 701 and a first extension pointer indication end 702. The first extension pointer fixed end 701 is fixedly arranged at a bottom end of the porous plate 401 in the second side plate assembly 5 and on a side of the porous plate away from the first monitoring ruler 6. The first extension pointer indication end 702 extends onto the first monitoring ruler 6. The first pointer 8 includes a first pointer fixed end 801 and a first pointer indication end 802. The first pointer fixed end 801 is fixedly arranged at the bottom end of the porous plate 401 in the second side plate assembly 5 and on a side of the porous plate close to the first monitoring ruler 6. The first pointer indication end 802 extends onto the first monitoring ruler 6. As shown in FIG. 2, the second monitoring ruler 9 is fixedly arranged at a top end of the porous plate 401 in the second side plate assembly 5, and extends toward the porous plate 401 in the first side plate assembly 4. The second monitoring ruler 9 and the first monitoring ruler 6 are located on the same side of the first side plate assembly 4 and the second side plate assembly 5. The second extension pointer 10 includes a second extension pointer fixed end 1001 and a second extension pointer indication end 1002. The second extension pointer fixed end 1001 is fixedly arranged at a top end of the porous plate 401 in the first side plate assembly 4 and on a side of the porous plate away from the second monitoring ruler 9. The second extension pointer indication end 1002 extends onto the second monitoring ruler 9. The second pointer 11 includes a second pointer fixed end 1101 and a second pointer indication end 1102. The second pointer fixed end 1101 is fixedly arranged at the top end of the porous plate 401 in the first side plate assembly 4 and on a side of the porous plate close to the second monitoring ruler 9. The second pointer indication end 1102 extends onto the second monitoring ruler 9.

In this embodiment, the cushioning assembly is arranged between the first side plate assembly 4 and the second side plate assembly 5, so that pressure may be respectively applied to the first side plate assembly 4 and the second side plate assembly 5 on left and right sides of the entire caulking monitoring restoring apparatus, to compress the air posts 1 forming the cushioning assembly. When the total thickness of the entire caulking monitoring restoring apparatus is less than the width of a gap to be caulked, the caulking monitoring restoring apparatus may be readily caulked in the gap. After the caulking monitoring restoring apparatus is inserted into the gap, the pressure on the first side plate assembly 4 and the second side plate assembly 5 is released, that is, the compression of the air posts 1 is released, and the elastic force of the air posts 1 makes jack posts 403 abut against sidewalls of the gap. Next, the positions of the oil distribution channels 4021 in the oil distribution channel holes 4012 are adjusted to a first position. In this case, the oil outlet holes 40211 in the oil distribution channels 4021 are in communication with jack post holes 4011. Next, the oil inlet nozzle 4023 is externally connected to an oil pump, and hydraulic oil is fed into the oil inlet cavity 4022. The hydraulic oil enters the jack post holes 4011 through the oil outlet holes 40211, and the jack posts 403 are pushed by the hydraulic oil to move outward, to enable the jack posts 403 to tightly abut against two sidewalls of the gap. When the sidewalls of the gap are not flat, the jack posts 403 at different positions move outward by different distances, to achieve applicability to caulking when the sidewalls of the gap are not flat. When one of a reading indicated by the first extension pointer 7 on the first monitoring ruler 6, a reading indicated by the first pointer 8 on the first monitoring ruler 6, a reading indicated by the second extension pointer 10 on the second monitoring ruler 9, and a reading indicated by the second pointer 11 on the second monitoring ruler 9 starts to change, it indicates that at this time the positions of the jack posts 403 are limited by the sidewalls of the gap and as a result the jack posts 403 are kept from moving. The force of the hydraulic oil makes the air posts 1 compress, and a spacing between the first side plate assembly 4 and the second side plate assembly 5 changes. In this case, it indicates that the positions of the jack posts 403 are adjusted in place. Therefore, the positions of the oil distribution channels 4021 in the oil distribution channel holes are adjusted to a second position. The oil pump is removed, and the oil inlet nozzle 4023 is sealed, to prevent the air posts 1 from being further compressed. In addition, the jack posts 403 are locked after adaptive adjustment, to keep the jack posts 403 from excessively jacking the sidewalls of the gap. The reading indicated by the first extension pointer 7 on the first monitoring ruler 6, the reading indicated by the first pointer 8 on the first monitoring ruler 6, the reading indicated by the second extension pointer 10 on the second monitoring ruler 9, and the reading indicated by the second pointer 11 on the second monitoring ruler 9 are recorded, and the readings are used as monitoring initial values of a position adjustment process of the jack posts. When the gap has undergone changes in position and shape, an air pump is sequentially externally connected to the restoring air nozzle 3 to feed air into the air post 1 for each air post 1 subject to compression, and the spacing between the first side plate assembly 4 and the second side plate assembly 5 is adjusted under the support of the air posts 1, until the reading indicated by the first extension pointer 7 on the first monitoring ruler 6, the reading indicated by the first pointer 8 on the first monitoring ruler 6, the reading indicated by the second extension pointer 10 on the second monitoring ruler 9, and the reading indicated by the second pointer 11 on the second monitoring ruler 9 all reach the monitoring initial values. When the readings reach the monitoring initial values, it indicates that the spacing of the gap returns to the state before deformation, and the member is restored. The air posts 1 implement damping and restoring and support. In one aspect the damping in construction nodes is increased, and the energy consumption capability and the shock resistance capability of the nodes in earthquakes is increased. In another aspect, the support can be implemented by feeding air, thereby implementing seismic restoration of the nodes. The first monitoring ruler 6 and the second monitoring ruler 9 are arranged, so that multipoint synchronous deformation monitoring of gap nodes can be completed, and meanwhile node restoration can be guided based on detection values. Therefore, the caulking monitoring restoring apparatus has functions such as caulking, monitoring, and restoring and has high adaptability to nonplanar complex gap sidewalls such as rough and uneven surfaces and voids and pits.

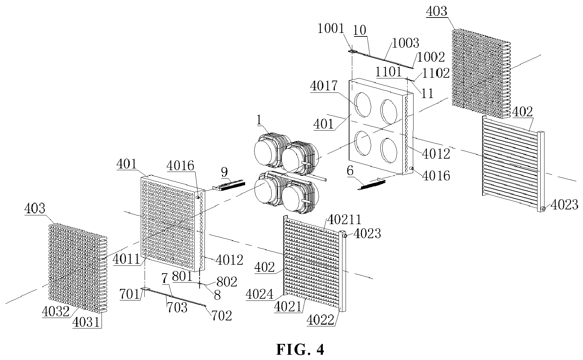

It needs to be noted that an outer diameter of each oil distribution channel 4021 is equal to a hole diameter of the oil distribution channel hole 4012. A spacing between two adjacent oil distribution channels 4021 is equal to a spacing between two adjacent oil distribution channel holes 4012. Referring to FIG. 1 and FIG. 4, the jack post holes 4011 located in the same horizontal direction are a row of jack post holes 4011, and the jack post holes 4011 located in the same vertical direction are a column of jack post holes 4011. Correspondingly, the jack posts 403 located in the same horizontal direction are a row of jack posts 403, and the jack posts 403 located in the same vertical direction are a column of jack posts 403.

Based on the foregoing embodiments, in a preferred embodiment, referring to FIG. 3, FIG. 4, and FIG. 12, the first monitoring ruler 6 includes a first monitoring ruler end base 601, a first far-end dial 602, and a first near-end dial 603. The first monitoring ruler end base 601 is fixedly arranged at the bottom end of the porous plate 401 in the first side plate assembly 4. The first far-end dial 602 is perpendicularly connected to the first monitoring ruler end base 601, and extends toward the porous plate 401 in the second side plate assembly 5. The first extension pointer indication end 702 extends onto the first far-end dial 602. The first near-end dial 603 is perpendicularly connected to an end portion of the first monitoring ruler end base 601 to form an L shape, and extends toward the porous plate 401 in the second side plate assembly 5. The first pointer indication end 802 extends onto the first near-end dial 603. Marks on the first near-end dial 603 are denser than those on the first far-end dial 602. In this embodiment, the first far-end dial 602 and the first near-end dial 603 are arranged. The first extension pointer fixed end 701 is far away from the first monitoring ruler 6. Therefore, the first extension pointer indication end 702 can move by a long distance by making an end of the porous plate 401 in the second side plate assembly 5 away from the first monitoring ruler 6 move by a short distance. Therefore, the marks on the first far-end dial 602 are sparser than those on the first near-end dial 603, so that a distance by which the porous plate 401 in the second side plate assembly 5 moves with respect to the porous plate 401 in the first side plate assembly 4 can be reflected more accurately. In an alternative embodiment, the first monitoring ruler 6 may include only one scale ruler.

Based on the foregoing embodiments, in a preferred embodiment, as shown in FIG. 2 and FIG. 4, the second monitoring ruler 9 includes a second monitoring ruler end base 901, a second far-end dial 902, and a second near-end dial 903. The second monitoring ruler end base 901 is fixedly arranged at the top end of the porous plate 401 in the second side plate assembly 5. The second far-end dial 902 is perpendicularly connected to the second monitoring ruler end base 901, and extends toward the porous plate 401 in the first side plate assembly 4. The second extension pointer indication end 1002 extends onto the second far-end dial 902. The second near-end dial 903 is perpendicularly connected to an end portion of the second monitoring ruler end base 901 to form an L shape, and extends toward the porous plate 401 in the first side plate assembly 4. The second pointer indication end 1102 extends onto the second near-end dial 903. Marks on the second near-end dial 903 are denser than those on the second far-end dial 902. In this embodiment, the second far-end dial 902 and the second near-end dial 903 are arranged. The second extension pointer fixed end 1001 is far away from the second monitoring ruler 9. Therefore, the second extension pointer indication end 1002 can move by a long distance by making an end of the porous plate 401 in the first side plate assembly 4 away from the second monitoring ruler 9 move by a short distance. Therefore, the marks on the second far-end dial 902 are sparser than those on the second near-end dial 903, so that a distance by which the porous plate 401 in the first side plate assembly 4 moves with respect to the porous plate 401 in the second side plate assembly 5 can be reflected more accurately. In an alternative embodiment, the second monitoring ruler 9 may include only one scale ruler.

Based on the foregoing embodiments, in a preferred embodiment, the first extension pointer fixed end 701 and the first extension pointer indication end 702 are interconnected by a first lever arm 703, and a cross-sectional area of the first extension pointer indication end 702 is less than a cross-sectional area of the first lever arm 703. As shown in FIG. 4, the first lever arm 703 is an elongated rod. The cross-sectional area of the first extension pointer indication end 702 is less than the cross-sectional area of the first lever arm 703, so that a mark pointed by the first extension pointer indication end on the first far-end dial 602 can be indicated more accurately. Certainly, in another alternative embodiment, when the cross-sectional area of the first lever arm 703 is small, the cross-sectional area of the first extension pointer indication end 702 may be equal to the cross-sectional area of the first lever arm 703.

Based on the foregoing embodiments, in a preferred embodiment, the second extension pointer fixed end 1001 and the second extension pointer indication end 1002 are interconnected by a second lever arm 1003, and a cross-sectional area of the second extension pointer indication end 1002 is less than a cross-sectional area of the second lever arm 1003. Further, referring to FIG. 4, the second lever arm 1003 is an elongated rod. The cross-sectional area of the second extension pointer indication end 1002 is less than the cross-sectional area of the second lever arm 1003, so that a mark pointed by the second extension pointer indication end on the second far-end dial 902 can be indicated more accurately. Certainly, in another alternative embodiment, when the cross-sectional area of the second lever arm 1003 is small, the cross-sectional area of the second extension pointer indication end 1002 may be equal to the cross-sectional area of the second lever arm 1003.

Based on the foregoing embodiments, in a preferred embodiment, a cross-sectional area of the first pointer indication end 802 is less than a cross-sectional area of the first pointer fixed end 801. Referring to FIG. 4, the first pointer indication end 802 has a needlepoint shape and a very small cross-sectional area, so that a mark pointed by the first pointer indication end on the first near-end dial 603 can be indicated accurately.

Based on the foregoing embodiments, in a preferred embodiment, a cross-sectional area of the second pointer indication end 1102 is less than a cross-sectional area of the second pointer fixed end 1101. Further, referring to FIG. 4, the second pointer indication end 1102 has a needlepoint shape and a very small cross-sectional area, so that a mark pointed by the second pointer indication end on the second near-end dial 903 can be indicated accurately.

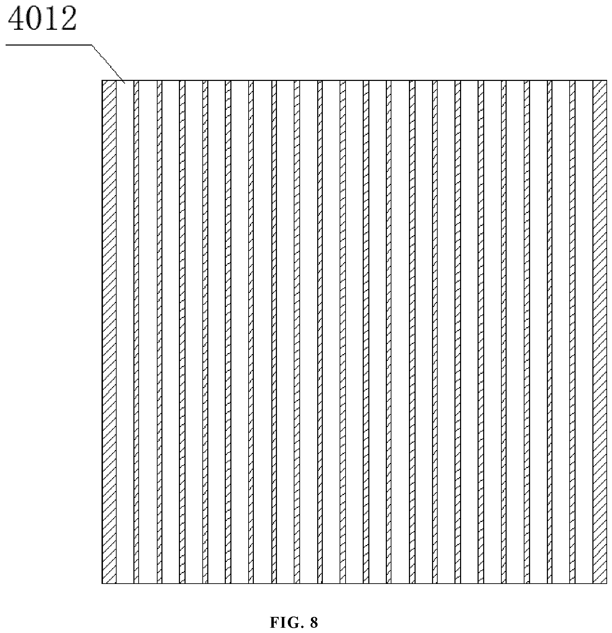

Based on the foregoing embodiments, in a preferred embodiment, as shown in FIG. 8, the oil distribution channel hole 4012 penetrates the porous plate 401. The length of the oil distribution channel 4021 is greater than the length of the oil distribution channel hole 4012. The oil distribution structure 402 further includes a sealing plate 4024 configured to seal second ends of the plurality of oil distribution channels 4021. As shown in FIG. 4, the sealing plate 4024 is a strip-shaped plate material, and may be fixedly connected to the second ends of the oil distribution channels 4021 by welding or bonding with a sealant. In the embodiment, during mounting, first the oil distribution channels 4021 pass through the oil distribution channel holes 4012. Next, the sealing plate 4024 is fixedly connected to the second ends of the oil distribution channels, to seal the second ends of the oil distribution channels 4021. The mounting manner is relatively simple, and the oil distribution channels 4021 can be prevented from sliding out of the oil distribution channel holes 4012. In an alternative embodiment, the second ends of the oil distribution channels 4021 may be closed during processing. That is, each oil distribution channel 4021 is a tubular structure with one closed end and one open end.

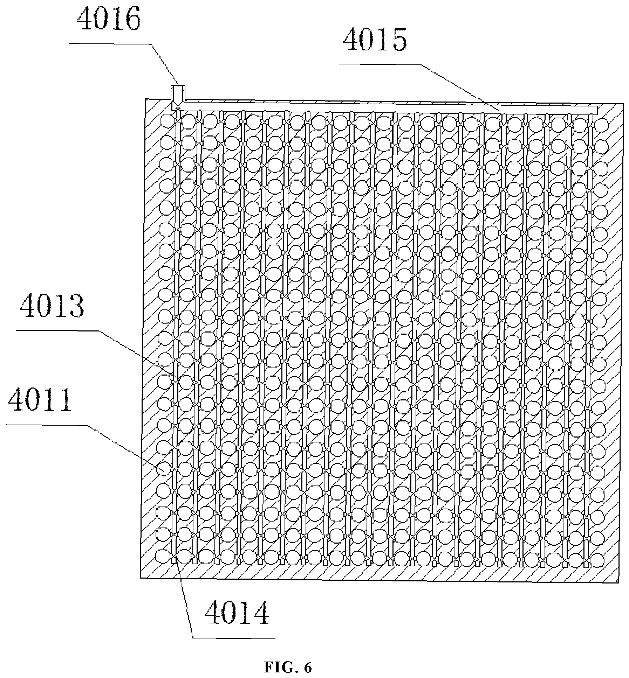

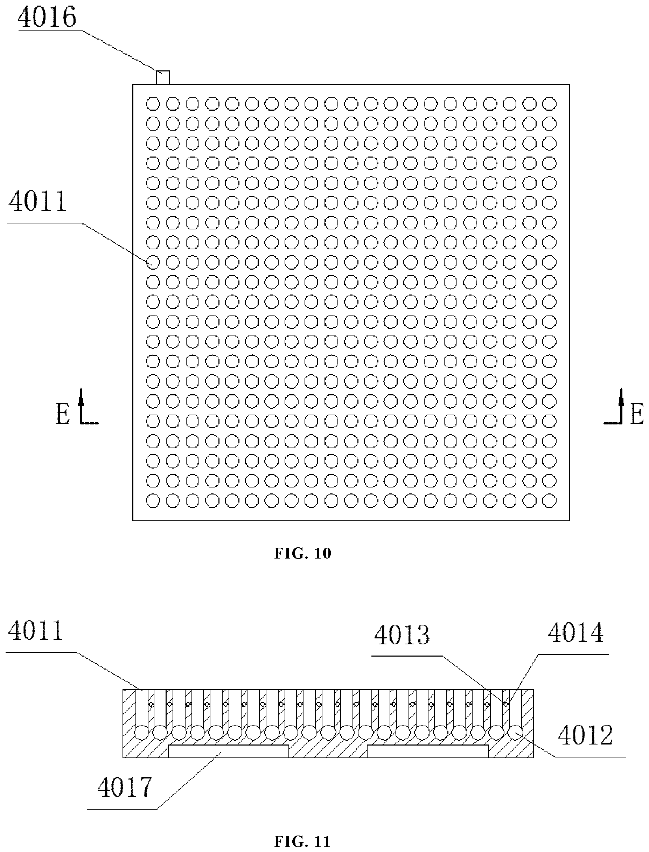

Based on the foregoing embodiments, in a preferred embodiment, as shown in FIG. 6 and FIG. 11, oil return branch passages 4013 and an oil return main passage 4015 are further provided in the porous plate 401. The oil return branch passages 4013 are arranged between any two adjacent rows of jack post holes 4011. The jack post holes 4011 are in communication with the oil return branch passage 4013 through oil discharge ports 4014. The oil return main passage 4015 is arranged on the same side of a plurality of oil return branch passages 4013, and is in communication with the oil return branch passages 4013. An end of the oil return main passage 4015 is connected to an oil return nozzle 4016. The oil return nozzle 4016 protrudes from the porous plate 401. In this embodiment, a return oil storage apparatus is externally connected to the oil return nozzle 4016, and the oil return branch passages 4013 and the oil return main passage 4015 are arranged to limit movement ranges of the jack posts 403. When the jack posts 403 move outward until the oil discharge ports 4014 are no longer blocked by the jack posts 403, the hydraulic oil in the oil distribution channels 4021 flows into the oil return branch passages 4013 through the oil holes, the jack post holes 4011, and the oil discharge ports 4014, to eventually converge in the oil return main passage 4015 and flow into the return oil storage apparatus through the oil return nozzle 4016. In this case, the jack posts 403 lose the pressure from the hydraulic oil and can no longer move outward. Therefore, movement ranges of inner ends of the jack posts 403 are between the oil distribution channel hole 4012 and the oil discharge ports 4014. In addition, the oil return branch passages 4013 and the oil return main passage 4015 are arranged, so that the hydraulic oil can be recycled.

It needs to be noted that the inner ends of the jack posts 403 refer to ends of the jack posts 403 close to the oil distribution channel hole 4012.

Based on the foregoing embodiments, in a preferred embodiment, further referring to FIG. 4, each jack post 403 includes a solid post body 4031 and a solid post cap 4032. The diameter of the post body 4031 is equal to the diameter of the oil outlet hole 40211. The post cap 4032 has a hemispherical shape. In this embodiment, with a hemispherical shape, the post cap 4032 can abut against sidewalls of different gaps, and the jack posts 403 have solid structures and do not deform easily, so that node deformation monitoring and support restoring are kept from being affected by deformations of the jack posts 403.

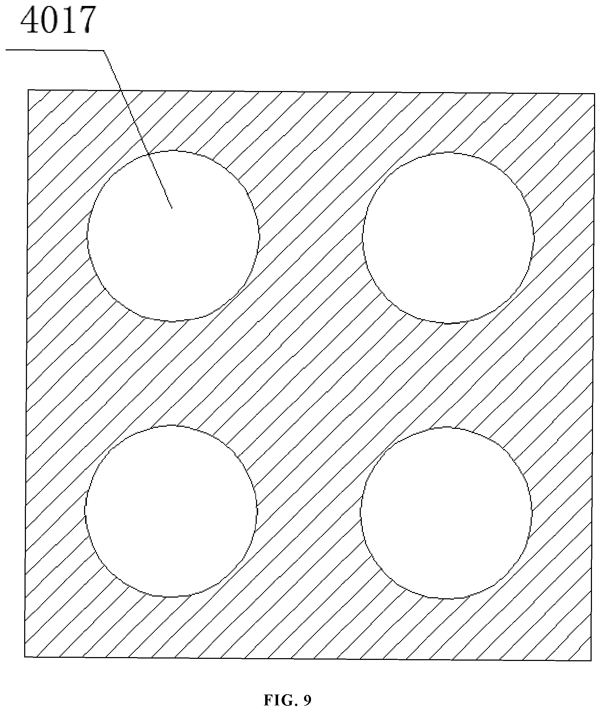

Optionally, based on the foregoing embodiments, in a preferred embodiment, as shown in FIG. 4 and FIG. 9, a plurality of limit grooves 4017 are provided in the porous plate 401, and the air posts 1 are arranged in the limit grooves 4017. In this embodiment, the limit grooves 4017 are provided to make it convenient to mount and fix the air posts 1. Specifically, as shown in FIG. 4, four limit grooves 4017 are provided in one porous plate 401. The cross-sectional size of each limit groove 4017 is consistent with the cross-sectional size of an end portion of the air post 1. In an alternative embodiment, the limit grooves 4017 may be omitted, and the air posts 1 are fixed on the porous plate 401 by bonding.

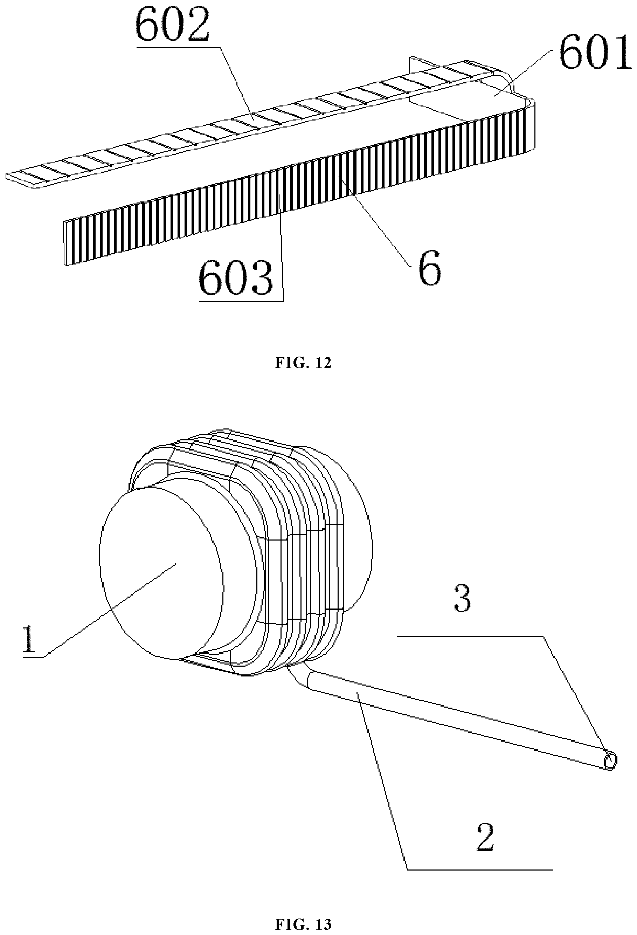

Based on the foregoing embodiments, in a preferred embodiment, as shown in FIG. 13, FIG. 14, and FIG. 16, a sidewall of each air post 1 has a corrugated shape. In this embodiment, the sidewall of the air post 1 has a corrugated shape, making it convenient for the air post 1 to retract and stretch.

It is defined that an end of the caulking monitoring restoring apparatus provided with the first monitoring ruler 6 and the second monitoring ruler 9 is an outer end and an end opposite to the outer end is an inner end. Two air posts 1 close to the near end are far away from the outer end. To make it convenient to connect the restoring air nozzles 3 on the air posts 1 to an air pump, referring to FIG. 4, FIG. 13, and FIG. 14, the lengths of the restoring air pipes 2 on the two air posts 1 are greater than the length of restoring air pipes 2 on the two air posts 1 close to the outer end.

### Embodiment 2

This embodiment further provides a caulking monitoring restoring apparatus, applied to the caulking monitoring servo apparatus provided in the foregoing embodiment. The caulking restoring method includes:
S 1. Compress the air posts 1 to make a total thickness of the caulking monitoring restoring apparatus less than a width of a gap to be caulked. Specifically, pressure is respectively applied to the first side plate assembly 4 and the second side plate assembly 5 on left and right sides of the entire caulking monitoring restoring apparatus, to compress the air posts 1 forming the cushioning assembly. When a total thickness of the entire caulking monitoring restoring apparatus is less than the width of a gap to be caulked, the caulking monitoring restoring apparatus may be readily caulked in the gap.
S2. Releasing the compression of the air posts 1 after the caulking monitoring restoring apparatus is inserted into the gap, where an elastic force of the air posts 1 makes the jack posts 403 abut against a sidewall of the gap. Specifically, the pressure on the first side plate assembly 4 and the second side plate assembly 5 is released, to release the compression of the air posts.
S3. Adjust the positions of the oil distribution channels 4021 in the oil distribution channel holes 4012 to a first position. In this case, oil outlet holes 40211 in the oil distribution channels 4021 are in communication with jack post holes 4011.
S4. Externally connect the oil inlet nozzle 4023 to an oil pump, feed hydraulic oil into the oil inlet cavity 4022, where the hydraulic oil enters the jack post holes 4011 through the oil outlet holes 40211, and the jack posts 403 are pushed by the hydraulic oil to move outward, and when any one of a reading indicated by the first extension pointer 7 on the first monitoring ruler 6, a reading indicated by the first pointer 8 on the first monitoring ruler 6, a reading indicated by the second extension pointer 10 on the second monitoring ruler 9, and a reading indicated by the second pointer 11 on the second monitoring ruler 9 starts to change, adjust the positions of the oil distribution channels 4021 in the oil distribution channel holes to the second position, remove the oil pump, and seal the oil inlet nozzle 4023. When one of a reading indicated by a first extension pointer 7 on a first monitoring ruler 6, a reading indicated by a first pointer 8 on the first monitoring ruler 6, a reading indicated by a second extension pointer 10 on a second monitoring ruler 9, and a reading indicated by a second pointer 11 on the second monitoring ruler 9 starts to change, it indicates that at this time the positions of the jack posts 403 are limited by the sidewalls of the gap and as a result the jack posts are kept from moving. The force of the hydraulic oil makes the air posts 1 compress, and a spacing between the first side plate assembly 4 and the second side plate assembly 5 changes. In this case, it indicates that the positions of the jack posts 403 are adjusted in place. Therefore, the positions of the oil distribution channels 4021 in the oil distribution channel holes are adjusted to a second position. The oil pump is removed, and the oil inlet nozzle 4023 is sealed, to prevent the air posts 1 from being further compressed. In addition, the jack posts 403 are locked after adaptive adjustment, to keep the jack posts 403 from excessively jacking the sidewalls of the gap. In the step, the oil inlet nozzles 4023 in the first side plate assembly 4 and the second side plate assembly 5 may be externally connected to an air pump simultaneously. Alternatively, one of the oil inlet nozzles 4023 is first externally connected to the air pump, and the other oil inlet nozzle 4023 is externally connected to the air pump after the jack post 403 on a corresponding side is adjusted in position.
S5. Record the reading indicated by the first extension pointer 7 on the first monitoring ruler 6, the reading indicated by the first pointer 8 on the first monitoring ruler 6, the reading indicated by the second extension pointer 10 on the second monitoring ruler 9, and the reading indicated by the second pointer 11 on the second monitoring ruler 9, and use the readings as monitoring initial values of an inflation process of the air posts 1.

When the gap has undergone changes in position and shape, the caulking restoring method further includes:
S6. Sequentially externally connect an air pump to the restoring air nozzle 3 to feed air into the air post 1 for each air post 1 subject to compression, and adjust a spacing between the first side plate assembly 4 and the second side plate assembly 5 under the support of the air posts 1, until the reading indicated by the first extension pointer 7 on the first monitoring ruler 6, the reading indicated by the first pointer 8 on the first monitoring ruler 6, the reading indicated by the second extension pointer 10 on the second monitoring ruler 9, and the reading indicated by the second pointer 11 on the second monitoring ruler 9 all reach the monitoring initial values. Specifically, for example, when the member deflects in the horizontal direction to cause the two air posts 1 close to the inner end to compress and the two air posts 1 close to the outer end to stretch, in this case, the air pump is sequentially externally connected to the restoring air nozzles 3 on the two air posts 1 close to the inner end to feed air into the air posts 1, and it is not necessary to externally connect the restoring air nozzles 3 on the two air posts 1 close to the outer end to the air pump. Under the support of the air posts 1, the member deflects in the opposite direction to restore. In another example, when the member deflects in the horizontal direction to cause the two air posts 1 close to the outer end to compress and the two air posts 1 close to the inner end to stretch, in this case, the air pump is sequentially externally connected to the restoring air nozzles 3 on the two air posts 1 close to the outer end to feed air into the air posts 1, and it is not necessary to externally connect the restoring air nozzles 3 on the two air posts 1 close to the inner end to the air pump. Under the support of the air posts 1, the member deflects in the opposite direction to restore. In another example, when the member twists in the vertical direction to cause two air posts 1 close to an upper end to compress and the two air posts 1 close to a lower end to stretch, in this case, the air pump is sequentially externally connected to the restoring air nozzles 3 on the two air posts 1 close to the upper end to feed air into the air posts 1, and it is not necessary to externally connect the restoring air nozzles 3 on the two air posts 1 close to the lower end to the air pump. Under the support of the air posts 1, the member deflects in the opposite direction to restore. In another example, when the member twists in the vertical direction to cause two air posts 1 close to the lower end to compress and the two air posts 1 close to the upper end to stretch, in this case, the air pump is sequentially externally connected to the restoring air nozzles 3 on the two air posts 1 close to the lower end to feed air into the air posts 1, and it is not necessary to externally connect the restoring air nozzles 3 on the two air posts 1 close to the upper end to the air pump. Under the support of the air posts 1, the member deflects in the opposite direction to restore.

## Claims

1. A caulking monitoring restoring apparatus, comprising:
a cushioning assembly, comprising two rows and two columns of air posts (1), wherein a restoring air hole (101) is provided in a sidewall of each air post (1), the restoring air hole (101) is connected to a restoring air pipe (2), and a restoring air nozzle (3) is arranged at an end portion of the restoring air pipe (2);
two side plate assemblies, being respectively a first side plate assembly (4) and a second side plate assembly (5), respectively connected to two sides of the cushioning assembly, wherein each of the first side plate assembly (4) and the second side plate assembly (5) comprises a porous plate (401), an oil distribution structure (402), and jack posts (403), a plurality of rows and a plurality of columns of jack post holes (4011) are provided in a side of the porous plate (401) away from the cushioning assembly, a plurality of oil distribution channel holes (4012) are provided in the porous plate (401), each oil distribution channel hole (4012) is in communication with one row of jack post holes (4011), the oil distribution structure (402) comprises oil distribution channels (4021) having a one-to-one correspondence with the plurality of oil distribution channel holes (4012) and an oil inlet cavity (4022) in communication with first ends of the plurality of oil distribution channels (4021), the oil inlet cavity (4022) is connected to an oil inlet nozzle (4023), oil outlet holes (40211) having a one-to-one correspondence with jack post holes (4011) in a corresponding row are provided in each oil distribution channel (4021), each oil distribution channel (4021) is movably arranged in a corresponding oil distribution channel hole (4012) and has a first position that allows communication between each oil outlet hole (40211) and a corresponding jack post hole (4011) and a second position that allows each oil outlet hole (40211) to be blocked by a hole wall of the oil distribution channel hole (4012), a plurality of rows and a plurality of columns of jack posts (403) are arranged and have a one-to-one correspondence with the plurality of rows and the plurality of columns of jack post holes (4011), and the jack posts (403) are movably arranged in the jack post holes (4011); and
a monitoring assembly, comprising:
a first monitoring ruler (6), fixedly arranged at a bottom end of the porous plate (401) in the first side plate assembly (4), and extending toward the porous plate (401) in the second side plate assembly (5);
a first extension pointer (7), comprising a first extension pointer fixed end (701) and a first extension pointer indication end (702), wherein the first extension pointer fixed end (701) is fixedly arranged at a bottom end of the porous plate (401) in the second side plate assembly (5) and on a side of the porous plate away from the first monitoring ruler (6), and the first extension pointer indication end (702) extends onto the first monitoring ruler (6);
a first pointer (8), comprising a first pointer fixed end (801) and a first pointer indication end (802), wherein the first pointer fixed end (801) is fixedly arranged at the bottom end of the porous plate (401) in the second side plate assembly (5) and on a side of the porous plate close to the first monitoring ruler (6), and the first pointer indication end (802) extends onto the first monitoring ruler (6);
a second monitoring ruler (9), fixedly arranged at a top end of the porous plate (401) in the second side plate assembly (5), and extending toward the porous plate (401) in the first side plate assembly (4), wherein the second monitoring ruler (9) and the first monitoring ruler (6) are located on the same side of the first side plate assembly (4) and the second side plate assembly (5);
a second extension pointer (10), comprising a second extension pointer fixed end (1001) and a second extension pointer indication end (1002), wherein the second extension pointer fixed end (1001) is fixedly arranged at a top end of the porous plate (401) in the first side plate assembly (4) and on a side of the porous plate away from the second monitoring ruler (9), and the second extension pointer indication end (1002) extends onto the second monitoring ruler (9); and
a second pointer (11), comprising a second pointer fixed end (1101) and a second pointer indication end (1102), wherein the second pointer fixed end (1101) is fixedly arranged at the top end of the porous plate (401) in the first side plate assembly (4) and on a side of the porous plate close to the second monitoring ruler (9), and the second pointer indication end (1102) extends onto the second monitoring ruler (9).

2. The caulking monitoring restoring apparatus according to claim 1, wherein the first monitoring ruler (6) comprises:
a first monitoring ruler end base (601), fixedly arranged at the bottom end of the porous plate (401) in the first side plate assembly (4);
a first far-end dial (602), perpendicularly connected to the first monitoring ruler end base (601), and extending toward the porous plate (401) in the second side plate assembly (5), wherein the first extension pointer indication end (702) extends onto the first far-end dial (602);
a first near-end dial (603), perpendicularly connected to an end portion of the first monitoring ruler end base (601) to form an L shape, and extending toward the porous plate (401) in the second side plate assembly (5), wherein the first pointer indication end (802) extends onto the first near-end dial (603), and marks on the first near-end dial (603) are denser than those on the first far-end dial (602); and/or
the second monitoring ruler (9) comprises:
a second monitoring ruler end base (901), fixedly arranged at the top end of the porous plate (401) in the second side plate assembly (5);
a second far-end dial (902), perpendicularly connected to the second monitoring ruler end base (901), and extending toward the porous plate (401) in the first side plate assembly (4), wherein the second extension pointer indication end (1002) extends onto the second far-end dial (902); and
a second near-end dial (903), perpendicularly connected to an end portion of the second monitoring ruler end base (901) to form an L shape, and extending toward the porous plate (401) in the first side plate assembly (4), wherein the second pointer indication end (1102) extends onto the second near-end dial (903), and marks on the second near-end dial (903) are denser than those on the second far-end dial (902).

3. The caulking monitoring restoring apparatus according to claim 1, wherein the first extension pointer fixed end (701) and the first extension pointer indication end (702) are interconnected by a first lever arm (703), and a cross-sectional area of the first extension pointer indication end (702) is less than a cross-sectional area of the first lever arm (703); and/or
the second extension pointer fixed end (1001) and the second extension pointer indication end (1002) are interconnected by a second lever arm (1003), and a cross-sectional area of the second extension pointer indication end (1002) is less than a cross-sectional area of the second lever arm (1003).

4. The caulking monitoring restoring apparatus according to claim 1, wherein a cross-sectional area of the first pointer indication end (802) is less than a cross-sectional area of the first pointer fixed end (801); and/or
a cross-sectional area of the second pointer indication end (1102) is less than a cross-sectional area of the second pointer fixed end (1101).

5. The caulking monitoring restoring apparatus according to claim 1, wherein the oil distribution channel hole (4012) penetrates the porous plate (401), a length of the oil distribution channel (4021) is greater than a length of the oil distribution channel hole (4012), and the oil distribution structure (402) further comprises a sealing plate (4024) configured to seal second ends of the plurality of oil distribution channels (4021).

6. The caulking monitoring restoring apparatus according to any one of claims 1 to 5, wherein the porous plate (401) is further provided with:
oil return branch passages (4013), arranged between any two adjacent rows of jack post holes (4011), wherein the jack post holes (4011) are in communication with the oil return branch passage (4013) through oil discharge ports (4014); and
an oil return main passage (4015), arranged on the same side of a plurality of oil return branch passages (4013), and being in communication with the oil return branch passages (4013), wherein an end of the oil return main passage (4015) is connected to an oil return nozzle (4016), and the oil return nozzle (4016) protrudes from the porous plate (401).

7. The caulking monitoring restoring apparatus according to any one of claims 1 to 5, wherein each jack post (403) comprises a solid post body (4031) and a solid post cap (4032), a diameter of the post body (4031) is equal to a diameter of the oil outlet hole (40211), and the post cap (4032) has a hemispherical shape.

8. The caulking monitoring restoring apparatus according to any one of claims 1 to 5, wherein a plurality of limit grooves (4017) are provided in the porous plate (401), and the air posts (1) are arranged in the limit grooves (4017).

9. The caulking monitoring restoring apparatus according to claim 8, wherein a sidewall of each air post (1) has a corrugated shape.

10. A caulking restoring method, applied to the caulking monitoring restoring apparatus according to any one of claims 1 to 9, wherein the caulking restoring method comprises:
S1. compressing the air posts (1) to make a total thickness of the caulking monitoring restoring apparatus less than a width of a gap to be caulked;
S2. releasing the compression of the air posts (1) after the caulking monitoring restoring apparatus is inserted into the gap, wherein an elastic force of the air posts (1) makes the jack posts (403) abut against a sidewall of the gap;
S3. adjusting positions of the oil distribution channels (4021) in the oil distribution channel holes (4012) to the first position;
S4. externally connecting the oil inlet nozzle (4023) to an oil pump, feeding hydraulic oil into the oil inlet cavity (4022), wherein the hydraulic oil enters the jack post holes (4011) through the oil outlet holes (40211), and the jack posts (403) are pushed by the hydraulic oil to move outward, and when any one of a reading indicated by the first extension pointer (7) on the first monitoring ruler (6), a reading indicated by the first pointer (8) on the first monitoring ruler (6), a reading indicated by the second extension pointer (10) on the second monitoring ruler (9), and a reading indicated by the second pointer (11) on the second monitoring ruler (9) starts to change, adjusting the positions of the oil distribution channels (4021) in the oil distribution channel holes to the second position, removing the oil pump, and sealing the oil inlet nozzle (4023); and
S5. recording the reading indicated by the first extension pointer (7) on the first monitoring ruler (6), the reading indicated by the first pointer (8) on the first monitoring ruler (6), the reading indicated by the second extension pointer (10) on the second monitoring ruler (9), and the reading indicated by the second pointer (11) on the second monitoring ruler (9), and using the readings as monitoring initial values of an inflation process of the air posts (1); and
when the gap has undergone changes in position and shape, the caulking restoring method further comprises:
S6. sequentially externally connecting an air pump to the restoring air nozzle (3) to feed air into the air post (1) for each air post (1) subject to compression, and adjusting a spacing between the first side plate assembly (4) and the second side plate assembly (5) under the support of the air posts (1), until the reading indicated by the first extension pointer (7) on the first monitoring ruler (6), the reading indicated by the first pointer (8) on the first monitoring ruler (6), the reading indicated by the second extension pointer (10) on the second monitoring ruler (9), and the reading indicated by the second pointer (11) on the second monitoring ruler (9) all reach the monitoring initial values.

## Patentansprüche

1. Vorrichtung zur Wiederherstellung einer Abdichtungsüberwachung, umfassend:
eine Polsteranordnung, umfassend zwei Reihen und zwei Spalten von Luftpfosten (1), wobei in einer Seitenwand jedes Luftpfostens (1) eine Wiederherstellungsluftöffnung (101) vorgesehen ist, die Wiederherstellungsluftöffnung (101) mit einem Wiederherstellungsluftrohr (2) verbunden ist, und eine Wiederherstellungsluftdüse (3) an einem Endabschnitt des Wiederherstellungsluftrohrs (2) angeordnet ist;
zwei Seitenplattenanordnungen, die jeweils eine erste Seitenplattenanordnung (4) und eine zweite Seitenplattenanordnung (5) sind, die jeweils mit zwei Seiten der Polsteranordnung verbunden sind, wobei jede der ersten Seitenplattenanordnung (4) und der zweiten Seitenplattenanordnung (5) eine poröse Platte (401), eine Ölverteilungsstruktur (402) und Hubpfosten (403) umfasst, eine Vielzahl von Reihen und eine Vielzahl von Spalten von Hubpfostenlöchern (4011) in einer Seite der porösen Platte (401) weg von der Polsteranordnung vorgesehen sind, eine Vielzahl von Ölverteilungskanallöchern (4012) in der porösen Platte (401) vorgesehen sind, jedes Ölverteilungskanalloch (4012) mit einer Reihe von Hubpfostenlöchern (4011) in Verbindung steht, die Ölverteilungsstruktur (402) Ölverteilungskanäle (4021) umfasst, die eine Eins-zu-eins-Entsprechung mit der Vielzahl von Ölverteilungskanallöchern (4012) aufweisen, und einen Öleinlasshohlraum (4022), der mit ersten Enden der Vielzahl von Ölverteilungskanälen (4021) in Verbindung steht, der Öleinlasshohlraum (4022) mit einer Öleinlassdüse (4023) verbunden ist, Ölauslasslöcher (40211), die eine Eins-zu-eins-Entsprechung mit Hubpfostenlöchern (4011) in einer entsprechenden Reihe aufweisen, in jedem Ölverteilungskanal (4021) vorgesehen sind, jeder Ölverteilungskanal (4021) bewegbar in einem entsprechenden Ölverteilungskanalloch (4012) angeordnet ist und eine erste Position, die eine Verbindung zwischen jedem Ölauslassloch (40211) und einem entsprechenden Hubpfostenloch (4011) ermöglicht, und eine zweite Position hat, die es ermöglicht, dass jedes Ölauslassloch (40211) durch eine Lochwand des Ölverteilungskanallochs (4012) blockiert wird, eine Vielzahl von Reihen und eine Vielzahl von Spalten von Hubpfosten (403) angeordnet sind und eine Eins-zu-eins-Entsprechung mit der Vielzahl von Reihen und der Vielzahl von Spalten von Hubpfostenlöchern (4011) haben und die Hubpfosten (403) bewegbar in den Hubpfostenlöchern (4011) angeordnet sind; und
eine Überwachungsanordnung, umfassend:
ein erstes Überwachungslineal (6), das fest an einem unteren Ende der porösen Platte (401) in der ersten Seitenplattenanordnung (4) angeordnet ist und sich in Richtung der porösen Platte (401) in der zweiten Seitenplattenanordnung (5) erstreckt;
einen ersten Verlängerungszeiger (7), umfassend ein feststehendes Ende (701) des ersten Verlängerungszeigers und ein Anzeigeende (702) des ersten Verlängerungszeigers, wobei das feststehende Ende (701) des ersten Verlängerungszeigers fest am unteren Ende der porösen Platte (401) in der zweiten Seitenplattenanordnung (5) und auf einer Seite der porösen Platte weg vom ersten Überwachungslineal (6) angeordnet ist, und das Anzeigeende (702) des ersten Verlängerungszeigers sich auf das erste Überwachungslineal (6) erstreckt.
einen ersten Zeiger (8), umfassend ein feststehendes Ende (801) des ersten Zeigers und ein Anzeigeende (802) des ersten Zeigers, wobei das feststehende Ende (801) des ersten Zeigers fest am unteren Ende der porösen Platte (401) in der zweiten Seitenplattenanordnung (5) und auf einer Seite der porösen Platte nahe dem ersten Überwachungslineal (6) angeordnet ist, und das Anzeigeende (802) des ersten Zeigers sich auf das erste Überwachungslineal (6) erstreckt
ein zweites Überwachungslineal (9), das fest am oberen Ende der porösen Platte (401) in der zweiten Seitenplattenanordnung (5) angeordnet ist und sich in Richtung der porösen Platte (401) in der ersten Seitenplattenanordnung (4) erstreckt, wobei das zweite Überwachungslineal (9) und das erste Überwachungslineal (6) auf derselben Seite der ersten Seitenplattenanordnung (4) und der zweiten Seitenplattenanordnung (5) angeordnet sind.
einen zweiten Verlängerungszeiger (10), umfassend ein feststehendes Ende (1001) des zweiten Verlängerungszeigers und ein Anzeigeende (1002) des zweiten Verlängerungszeigers, wobei das feststehende Ende (1001) des zweiten Verlängerungszeigers fest am oberen Ende der porösen Platte (401) in der ersten Seitenplattenanordnung (4) und auf einer Seite der porösen Platte weg vom zweiten Überwachungslineal (9) angeordnet ist, und das Anzeigeende (1002) des zweiten Verlängerungszeigers sich auf das zweite Überwachungslineal (9) erstreckt; und
einen zweiten Zeiger (11), umfassend ein feststehendes Ende (1101) des zweiten Zeigers und ein Anzeigeende (1102) des zweiten Zeigers, wobei das feststehende Ende (1101) des zweiten Zeigers fest am oberen Ende der porösen Platte (401) in der ersten Seitenplattenanordnung (4) und auf einer Seite der porösen Platte nahe dem zweiten Überwachungslineal (9) angeordnet ist, und das Anzeigeende (1102) des zweiten Zeigers sich auf das zweite Überwachungslineal (9) erstreckt.

2. Vorrichtung zur Wiederherstellung einer Abdichtungsüberwachung nach Anspruch 1, wobei das erste Überwachungslineal (6) umfasst:
eine Endbasis (601) des ersten Überwachungslineals, die fest am unteren Ende der porösen Platte (401) in der ersten Seitenplattenanordnung (4) angeordnet ist;
eine erste Skala am fernen Ende (602), die rechtwinklig mit der Endbasis (601) des ersten Überwachungslineals verbunden ist und sich in Richtung der porösen Platte (401) in der zweiten Seitenplattenanordnung (5) erstreckt, wobei das Anzeigeende (702) des ersten Verlängerungszeigers sich auf die erste Skala am fernen Ende (602) erstreckt;
eine erste Skala am nahen Ende (603), die rechtwinklig mit einem Endabschnitt der Endbasis (601) des ersten Überwachungslineals verbunden ist, um eine L-Form zu bilden, und sich in Richtung der porösen Platte (401) in der zweiten Seitenplattenanordnung (5) erstreckt, wobei das Anzeigeende (802) des ersten Zeigers sich auf die erste Skala am nahen Ende (603) erstreckt, und die Markierungen auf der ersten Skala am nahen Ende (603) dichter als jene auf der ersten Skala am fernen Ende (602) sind; und/oder
das zweite Überwachungslineal (9) umfasst:
eine zweite Endbasis (901) des Überwachungslineals, die fest am oberen Ende der porösen Platte (401) in der zweiten Seitenplattenanordnung (5) angeordnet ist;
eine zweite Skala am fernen Ende (902), die rechtwinklig mit der zweiten Endbasis (901) des Überwachungslineals verbunden ist und sich in Richtung der porösen Platte (401) in der ersten Seitenplattenanordnung (4) erstreckt, wobei das Anzeigeende (1002) des zweiten Verlängerungszeigers sich auf die zweite Skala am fernen Ende (902) erstreckt; und
eine zweite Skala am nahen Ende (903), die rechtwinklig mit einem Endabschnitt der zweiten Endbasis (901) des Überwachungslineals verbunden ist, um eine L-Form zu bilden, und sich in Richtung der porösen Platte (401) in der ersten Seitenplattenanordnung (4) erstreckt, wobei das Anzeigeende (1102) des zweiten Zeigers sich auf die zweite Skala am nahen Ende (903) erstreckt und die Markierungen auf der zweiten Skala am nahen Ende (903) dichter als jene auf der zweiten Skala am fernen Ende (902) sind.

3. Vorrichtung zur Wiederherstellung einer Abdichtungsüberwachung nach Anspruch 1, wobei das feststehende Ende (701) des ersten Verlängerungszeigers und das Anzeigeende (702) des ersten Verlängerungszeigers durch einen ersten Hebelarm (703) miteinander verbunden sind und die Querschnittsfläche des Anzeigeendes (702) des ersten Verlängerungszeigers kleiner als die Querschnittsfläche des ersten Hebelarms (703) ist; und/oder
das feststehende Ende (1001) des zweiten Verlängerungszeigers und das Anzeigeende (1002) des zweiten Verlängerungszeigers durch einen zweiten Hebelarm (1003) miteinander verbunden sind und die Querschnittsfläche des Anzeigeendes (1002) des zweiten Verlängerungszeigers kleiner als die Querschnittsfläche des zweiten Hebelarms (1003) ist.

4. Vorrichtung zur Wiederherstellung einer Abdichtungsüberwachung gemäß Anspruch 1, wobei die Querschnittsfläche des Anzeigeendes (802) des ersten Zeigers kleiner als die Querschnittsfläche des feststehenden Endes (801) des ersten Zeigers ist; und/oder
die Querschnittsfläche des Anzeigeendes (1102) des zweiten Zeigers kleiner als die Querschnittsfläche des feststehenden Endes (1101) des zweiten Zeigers ist.

5. Vorrichtung zur Wiederherstellung einer Abdichtungsüberwachung nach Anspruch 1, wobei das Ölverteilungskanalloch (4012) die poröse Platte (401) durchdringt, eine Länge des Ölverteilungskanals (4021) größer als eine Länge des Ölverteilungskanallochs (4012) ist und die Ölverteilungsstruktur (402) ferner eine Dichtungsplatte (4024) umfasst, die dazu ausgelegt ist, zweite Enden der Vielzahl von Ölverteilungskanälen (4021) abzudichten.

6. Vorrichtung zur Wiederherstellung einer Abdichtungsüberwachung nach einem der Ansprüche 1 bis 5, wobei die poröse Platte (401) ferner versehen ist mit:
Ölrücklaufzweigkanäle (4013), die zwischen zwei benachbarten Reihen von Hubpfostenlöchern (4011) angeordnet sind, wobei die Hubpfostenlöcher (4011) durch Ölabflussöffnungen (4014) mit dem Ölrücklaufzweigkanal (4013) in Verbindung stehen; und
einen Ölrücklaufhauptkanal (4015), der auf derselben Seite wie eine Vielzahl von Ölrücklaufzweigkanälen (4013) angeordnet ist und mit den Ölrücklaufzweigkanälen (4013) in Verbindung steht, wobei ein Ende des Ölrücklaufhauptkanals (4015) mit einer Ölrücklaufdüse (4016) verbunden ist und die Ölrücklaufdüse (4016) aus der porösen Platte (401) herausragt.

7. Vorrichtung zur Wiederherstellung einer Abdichtungsüberwachung nach einem der Ansprüche 1 bis 5, wobei jeder Hubpfosten (403) einen massiven Pfostenkörper (4031) und eine massive Pfostenkappe (4032) umfasst, ein Durchmesser des Pfostenkörpers (4031) gleich einem Durchmesser des Ölauslasslochs (40211) ist und die Pfostenkappe (4032) eine halbkugelförmige Form aufweist.

8. Vorrichtung zur Wiederherstellung einer Abdichtungsüberwachung nach einem der Ansprüche 1 bis 5, wobei eine Vielzahl von Begrenzungsnuten (4017) in der porösen Platte (401) vorgesehen sind und die Luftpfosten (1) in den Begrenzungsnuten (4017) angeordnet sind.

9. Vorrichtung zur Wiederherstellung einer Abdichtungsüberwachung nach Anspruch 8, wobei eine Seitenwand jedes Luftpfostens (1) eine gewellte Form aufweist.

10. Verfahren zur Wiederherstellung einer Abdichtung, angewendet auf die Vorrichtung zur Wiederherstellung einer Abdichtungsüberwachung nach einem der Ansprüche 1 bis 9, wobei das Verfahren zur Wiederherstellung einer Abdichtung umfasst:
S1. Komprimieren der Luftpfosten (1), um die Gesamtdicke der Vorrichtung zur Wiederherstellung einer Abdichtungsüberwachung kleiner als die Breite eines abzudichtenden Spalts zu machen;
S2. Lösen der Kompression der Luftpfosten (1), nachdem die Vorrichtung zur Wiederherstellung einer Abdichtungsüberwachung in den Spalt eingeführt wurde, wobei eine elastische Kraft der Luftpfosten (1) bewirkt, dass die Hubpfosten (403) an einer Seitenwand des Spalts anliegen;
S3. Anpassen der Positionen der Ölverteilungskanäle (4021) in den Ölverteilungskanallöchern (4012) auf die erste Position;
S4. externes Anschließen der Öleinlassdüse (4023) an eine Ölpumpe, Einleiten von Hydrauliköl in den Öleinlasshohlraum (4022), wobei das Hydrauliköl durch die Ölauslasslöcher (40211) in die Hubpfostenlöcher (4011) gelangt und die Hubpfosten (403) durch das Hydrauliköl nach außen gedrückt werden, und wenn einer eines durch den ersten Verlängerungszeiger (7) auf dem ersten Überwachungslineal (6) angezeigten Ablesewertes, eines durch den ersten Zeiger (8) auf dem ersten Überwachungslineal (6) angezeigten Ablesewertes, eines durch den zweiten Verlängerungszeiger (10) auf dem zweiten Überwachungslineal (9) angezeigten Ablesewertes oder eines durch den zweiten Zeiger (11) auf dem zweiten Überwachungslineal (9) angezeigten Ablesewertes sich zu ändern beginnt, Anpassen der Positionen der Ölverteilungskanäle (4021) in den Ölverteilungskanallöchern auf die zweite Position, Entfernen der Ölpumpe und Abdichten der Öleinlassdüse (4023); und
S5. Aufzeichnen des durch den ersten Verlängerungszeiger (7) auf dem ersten Überwachungslineal (6) angezeigten Ablesewertes, des durch den ersten Zeiger (8) auf dem ersten Überwachungslineal (6) angezeigten Ablesewertes, des durch den zweiten Verlängerungszeiger (10) auf dem zweiten Überwachungslineal (9) angezeigten Ablesewertes und des durch den zweiten Zeiger (11) auf dem zweiten Überwachungslineal (9) angezeigten Ablesewertes, und Verwenden dieser Ablesewerte als Überwachungsanfangswerte eines Aufblasprozesses der Luftpfosten (1); und
wenn der Spalt Positions- und Formänderungen erfahren hat, umfasst das Verfahren zur Wiederherstellung einer Abdichtung ferner:
S6. sequenzielles externes Anschließen einer Luftpumpe an die Wiederherstellungsluftdüse (3), um Luft in den Luftpfosten (1) für jeden einer Kompression unterliegenden Luftpfosten (1) einzuleiten, und Anpassen des Abstands zwischen der ersten Seitenplattenanordnung (4) und der zweiten Seitenplattenanordnung (5) unter der Stützung der Luftpfosten (1), bis der durch den ersten Verlängerungszeiger (7) auf dem ersten Überwachungslineal (6) angezeigte Ablesewert, der durch den ersten Zeiger (8) auf dem ersten Überwachungslineal (6) angezeigte Ablesewert, der durch den zweiten Verlängerungszeiger (10) auf dem zweiten Überwachungslineal (9) angezeigte Ablesewert und der durch den zweiten Zeiger (11) auf dem zweiten Überwachungslineal (9) angezeigte Ablesewert alle die Überwachungsanfangswerte erreichen.

## Revendications

1. Appareil de surveillance-restauration de colmatage, comprenant :
un ensemble d'amortissement, comprenant deux rangées et deux colonnes de poteaux à air (1), dans lequel un trou d'air de restauration (101) est prévu dans une paroi latérale de chaque poteau à air (1), le trou d'air de restauration (101) est raccordé à un tuyau d'air de restauration (2), et une buse d'air de restauration (3) est agencée à une partie d'extrémité du tuyau d'air de restauration (2) ;
deux ensembles plaque-latérale, respectivement un premier ensemble plaque-latérale (4) et un second ensemble plaque-latérale (5), respectivement raccordés à deux côtés de l'ensemble d'amortissement, dans lequel chacun du premier ensemble plaque-latérale (4) et du second ensemble plaque-latérale (5) comprend une plaque poreuse (401), une structure de distribution d'huile (402), et des poteaux à vérin (403), une pluralité de rangées et une pluralité de colonnes de trous de poteaux à vérin (4011) sont prévues dans un côté de la plaque poreuse (401) éloigné de l'ensemble d'amortissement, une pluralité de trous de canaux de distribution d'huile (4012) sont prévus dans la plaque poreuse (401), chaque trou de canal de distribution d'huile (4012) est en communication avec une rangée de trous de poteaux à vérin (4011), la structure de distribution d'huile (402) comprend des canaux de distribution d'huile (4021) ayant une correspondance un-à-un avec la pluralité de trous de canaux de distribution d'huile (4012) et une cavité d'entrée d'huile (4022) en communication avec des premières extrémités de la pluralité de canaux de distribution d'huile (4021), la cavité d'entrée d'huile (4022) est raccordée à une buse d'entrée d'huile (4023), des trous de sortie d'huile (40211) ayant une correspondance un-à-un avec des trous de poteaux à vérin (4011) dans une rangée correspondante sont prévus dans chaque canal de distribution d'huile (4021), chaque canal de distribution d'huile (4021) est agencé de façon mobile dans un trou de canal de distribution d'huile correspondant (4012) et a une première position qui permet la communication entre chaque trou de sortie d'huile (40211) et un trou de poteau à vérin correspondant (4011) et une seconde position qui permet à chaque trou de sortie d'huile (40211) d'être bloqué par une paroi de trou du trou de canal de distribution d'huile (4012), une pluralité de rangées et une pluralité de colonnes de poteaux à vérin (403) sont agencées et ont une correspondance une-à-une avec la pluralité de rangées et la pluralité de colonnes de trous de poteaux à vérin (4011), et les poteaux à vérin (403) sont agencés de façon mobile dans les trous de poteaux à vérin (4011) ; et
un ensemble de surveillance, comprenant :
une première règle de surveillance (6), agencée de façon fixe à une extrémité inférieure de la plaque poreuse (401) dans le premier ensemble plaque-latérale (4), et s'étendant vers la plaque poreuse (401) dans le second ensemble plaque-latérale (5) ;
un premier indicateur d'extension (7), comprenant une extrémité fixe de premier indicateur d'extension (701) et une extrémité d'indication de premier indicateur d'extension (702), dans lequel l'extrémité fixe de premier indicateur d'extension (701) est agencée de façon fixe à une extrémité inférieure de la plaque poreuse (401) dans le second ensemble plaque-latérale (5) et sur un côté de la plaque poreuse éloigné de la première règle de surveillance (6), et l'extrémité d'indication de premier indicateur d'extension (702) s'étend sur la première règle de surveillance (6) ;
un premier indicateur (8), comprenant une extrémité fixe de premier indicateur (801) et une extrémité d'indication de premier indicateur (802), dans lequel l'extrémité fixe de premier indicateur (801) est agencée de façon fixe à l'extrémité inférieure de la plaque poreuse (401) dans le second ensemble plaque-latérale (5) et sur un côté de la plaque poreuse près de la première règle de surveillance (6), et l'extrémité d'indication de premier indicateur (802) s'étend sur la première règle de surveillance (6) ;
une seconde règle de surveillance (9), agencée de façon fixe à une extrémité supérieure de la plaque poreuse (401) dans le second ensemble plaque-latérale (5), et s'étendant vers la plaque poreuse (401) dans le premier ensemble plaque-latérale (4), dans lequel la seconde règle de surveillance (9) et la première règle de surveillance (6) sont situées sur le même côté du premier ensemble plaque-latérale (4) et du second ensemble plaque-latérale (5) ;
un second indicateur d'extension (10), comprenant une extrémité fixe de second indicateur d'extension (1001) et une extrémité d'indication de second indicateur d'extension (1002), dans lequel l'extrémité fixe de second indicateur d'extension (1001) est agencée de façon fixe à une extrémité supérieure de la plaque poreuse (401) dans le premier ensemble plaque-latérale (4) et sur un côté de la plaque poreuse éloigné de la seconde règle de surveillance (9), et l'extrémité d'indication de second indicateur d'extension (1002) s'étend sur la seconde règle de surveillance (9) ; et
un second indicateur (11), comprenant une extrémité fixe de second indicateur (1101) et une extrémité d'indication de second indicateur (1102), dans lequel l'extrémité fixe de second indicateur (1101) est agencée de façon fixe à l'extrémité supérieure de la plaque poreuse (401) dans le premier ensemble plaque-latérale (4) et sur un côté de la plaque poreuse près de la seconde règle de surveillance (9), et l'extrémité d'indication de second indicateur (1102) s'étend sur la seconde règle de surveillance (9).

2. Appareil de surveillance-restauration de colmatage selon la revendication 1, dans lequel la première règle de surveillance (6) comprend :
une base d'extrémité de première règle de surveillance (601), agencée de façon fixe à l'extrémité inférieure de la plaque poreuse (401) dans le premier ensemble plaque-latérale (4) ;
un premier cadran d'extrémité distante (602), perpendiculairement raccordé à la base d'extrémité de première règle de surveillance (601), et s'étendant vers la plaque poreuse (401) dans le second ensemble plaque-latérale (5), dans lequel l'extrémité d'indication de premier indicateur d'extension (702) s'étend sur le premier cadran d'extrémité distante (602) ;
un premier cadran d'extrémité proche (603), perpendiculairement raccordé à une partie d'extrémité de la base d'extrémité de première règle de surveillance (601) pour former une forme de L, et s'étendant vers la plaque poreuse (401) dans le second ensemble plaque-latérale (5), dans lequel l'extrémité d'indication de premier indicateur (802) s'étend sur le premier cadran d'extrémité proche (603), et des marques sur le premier cadran d'extrémité proche (603) sont plus denses que celles sur le premier cadran d'extrémité distante (602) ; et/ou
la seconde règle de surveillance (9) comprend :
une base d'extrémité de seconde règle de surveillance (901), agencée de façon fixe à l'extrémité supérieure de la plaque poreuse (401) dans le second ensemble plaque-latérale (5) ;
un second cadran d'extrémité distante (902), perpendiculairement raccordé à la base d'extrémité de seconde règle de surveillance (901), et s'étendant vers la plaque poreuse (401) dans le premier ensemble plaque-latérale (4), dans lequel l'extrémité d'indication de second indicateur d'extension (1002) s'étend sur le second cadran d'extrémité distante (902) ; et
un second cadran d'extrémité proche (903), perpendiculairement raccordé à une partie d'extrémité de la base d'extrémité de seconde règle de surveillance (901) pour former une forme de L, et s'étendant vers la plaque poreuse (401) dans le premier ensemble plaque-latérale (4), dans lequel l'extrémité d'indication de second indicateur (1102) s'étend sur le second cadran d'extrémité proche (903), et des marques sur le second cadran d'extrémité proche (903) sont plus denses que celles sur le second cadran d'extrémité distante (902).

3. Appareil de surveillance-restauration de colmatage selon la revendication 1, dans lequel l'extrémité fixe de premier indicateur d'extension (701) et l'extrémité d'indication de premier indicateur d'extension (702) sont raccordées mutuellement par un premier bras-levier (703), et une superficie de section transversale de l'extrémité d'indication de premier indicateur d'extension (702) est inférieure à une superficie de section transversale du premier bras-levier (703) ; et/ou
l'extrémité fixe de second indicateur d'extension (1001) et l'extrémité d'indication de second indicateur d'extension (1002) sont raccordées mutuellement par un second bras-levier (1003), et une superficie de section transversale de l'extrémité d'indication de second indicateur d'extension (1002) est inférieure à une superficie de section transversale du second bras-levier (1003).

4. Appareil de surveillance-restauration de colmatage selon la revendication 1, dans lequel une superficie de section transversale de l'extrémité d'indication de premier indicateur (802) est inférieure à une superficie de section transversale de l'extrémité fixe de premier indicateur (801) ; et/ou
une superficie de section transversale de l'extrémité d'indication de second indicateur (1102) est inférieure à une superficie de section transversale de l'extrémité fixe de second indicateur (1101).

5. Appareil de surveillance-restauration de colmatage selon la revendication 1, dans lequel le trou de canal de distribution d'huile (4012) pénètre dans la plaque poreuse (401), une longueur du canal de distribution d'huile (4021) est supérieure à une longueur du trou de canal de distribution d'huile (4012), et la structure de distribution d'huile (402) comprend en outre une plaque d'étanchéité (4024) configurée pour étanchéifier des secondes extrémités de la pluralité de canaux de distribution d'huile (4021).

6. Appareil de surveillance-restauration de colmatage selon l'une quelconque des revendications 1 à 5, dans lequel la plaque poreuse (401) est en outre pourvue :
de passages de dérivation de retour d'huile (4013), agencés entre deux quelconques rangées adjacentes de trous de poteaux à vérin (4011), dans lequel les trous de poteaux à vérin (4011) sont en communication avec le passage de dérivation de retour d'huile (4013) par l'intermédiaire d'orifices d'évacuation d'huile (4014) ; et
d'un passage principal de retour d'huile (4015), agencé sur le même côté d'une pluralité de passages de dérivation de retour d'huile (4013), et en communication avec les passages de dérivation de retour d'huile (4013), dans lequel une extrémité du passage principal de retour d'huile (4015) est raccordée à une buse de retour d'huile (4016), et la buse de retour d'huile (4016) fait saillie à partir de la plaque poreuse (401).

7. Appareil de surveillance-restauration de colmatage selon l'une quelconque des revendications 1 à 5, dans lequel chaque poteau à vérin (403) comprend un corps de poteau solide (4031) et un capuchon de poteau solide (4032), un diamètre du corps de poteau (4031) est égal à un diamètre du trou de sortie d'huile (40211), et le capuchon de poteau (4032) a une forme hémisphérique.

8. Appareil de surveillance-restauration de colmatage selon l'une quelconque des revendications 1 à 5, dans lequel une pluralité de rainures de limite (4017) sont prévues dans la plaque poreuse (401), et les poteaux à air (1) sont agencés dans les rainures de limite (4017).

9. Appareil de surveillance-restauration de colmatage selon la revendication 8, dans lequel une paroi latérale de chaque poteau à air (1) a une forme ondulée.

10. Procédé de restauration de colmatage, appliqué à l'appareil de colmatage, de surveillance, et de restauration selon l'une quelconque des revendications 1 à 9, dans lequel le procédé de restauration de colmatage comprend :
S1. la compression des poteaux à air (1) pour amener une épaisseur totale de l'appareil de colmatage, de surveillance, et de restauration à être inférieure à une largeur d'un espace destiné à être colmaté ;
S2. le relâchement de la compression des poteaux à air (1) après que l'appareil de colmatage, de surveillance, et de restauration est inséré dans l'espace, dans lequel une force élastique des poteaux à air (1) amène les poteaux à vérin (403) à venir en butée contre une paroi latérale de l'espace ;
S3. le réglage de positions des canaux de distribution d'huile (4021) dans les trous de canaux de distribution d'huile (4012) à la première position ;
S4. le raccordement externe de la buse d'entrée d'huile (4023) à une pompe à huile, la réalisation de l'alimentation en l'huile hydraulique dans la cavité d'entrée d'huile (4022), dans lequel l'huile hydraulique entre dans les trous de poteaux à vérin (4011) à travers les trous de sortie d'huile (40211), et les poteaux à vérin (403) sont poussés par l'huile hydraulique pour se déplacer vers l'extérieur, et, lorsqu'un quelconque d'un résultat indiqué par le premier indicateur d'extension (7) sur la première règle de surveillance (6), d'un résultat indiqué par le premier indicateur (8) sur la première règle de surveillance (6), d'un résultat indiqué par le second indicateur d'extension (10) sur la seconde règle de surveillance (9), et d'un résultat indiqué par le second indicateur (11) sur la seconde règle de surveillance (9) commence à changer, le réglage des positions des canaux de distribution d'huile (4021) dans les trous de canaux de distribution d'huile à la seconde position, l'enlèvement de la pompe à huile, et l'étanchéification de la buse d'entrée d'huile (4023) ; et
S5. l'enregistrement du résultat indiqué par le premier indicateur d'extension (7) sur la première règle de surveillance (6), du résultat indiqué par le premier indicateur (8) sur la première règle de surveillance (6), du résultat indiqué par le second indicateur d'extension (10) sur la seconde règle de surveillance (9), et du résultat indiqué par le second indicateur (11) sur la seconde règle de surveillance (9), et l'utilisation des résultats en tant que valeurs initiales de surveillance d'un processus de gonflage des poteaux à air (1) ; et
lorsque l'espace a subi des changements de position et de forme, le procédé de restauration de colmatage comprend en outre :
S6. le raccordement externe séquentiel d'une pompe à air à la buse d'air de restauration (3) pour réaliser l'alimentation en air dans le poteau à air (1) pour chaque poteau à air (1) soumis à une compression, et le réglage d'un espacement entre le premier ensemble plaque-latérale (4) et le second ensemble plaque-latérale (5) sous le support des poteaux à air (1), jusqu'à ce que le résultat indiqué par le premier indicateur d'extension (7) sur la première règle de surveillance (6), le résultat indiqué par le premier indicateur (8) sur la première règle de surveillance (6), le résultat indiqué par le second indicateur d'extension (10) sur la seconde règle de surveillance (9), et le résultat indiqué par le second indicateur (11) sur la seconde règle de surveillance (9) atteignent tous les valeurs initiales de surveillance.
